(19) Europäisches Patentamt
European Patent Office
Office européen des brevets

(11) **EP 3 942 218 B1**

(12) **EUROPÄISCHE PATENTSCHRIFT**

(45) Veröffentlichungstag und Bekanntmachung des Hinweises auf die Patenterteilung:
**22.05.2024 Patentblatt 2024/21**

(21) Anmeldenummer: **20726757.6**

(22) Anmeldetag: **14.05.2020**

(51) Internationale Patentklassifikation (IPC):
**F17C 1/00** *(2006.01)*    **F17C 1/06** *(2006.01)*
**F17C 1/16** *(2006.01)*    **F17C 13/00** *(2006.01)*
**F17C 13/02** *(2006.01)*    **F17C 13/08** *(2006.01)*

(52) Gemeinsame Patentklassifikation (CPC):
**F17C 13/084;** F17C 2201/0109; F17C 2201/032;
F17C 2201/058; F17C 2203/0636;
F17C 2203/0663; F17C 2205/0111;
F17C 2205/0126; F17C 2205/0138;
F17C 2205/0169; F17C 2205/0326;
F17C 2205/0335; F17C 2205/0338;
F17C 2205/037; F17C 2221/011;    (Forts.)

(86) Internationale Anmeldenummer:
**PCT/EP2020/063437**

(87) Internationale Veröffentlichungsnummer:
**WO 2020/234102 (26.11.2020 Gazette 2020/48)**

(54) **AUSTAUSCHBARE KARTUSCHE, KARTUSCHEN-SYSTEM UND VERFAHREN ZUM VERBINDEN VON KARTUSCHEN**

REPLACEABLE CARTRIDGE, CARTRIDGE SYSTEM AND METHOD FOR CONNECTING CARTRIDGES

CARTOUCHE REMPLAÇABLE, SYSTÈME À CARTOUCHES ET PROCÉDÉ POUR ASSEMBLER DES CARTOUCHES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2019 DE 102019113063**

(43) Veröffentlichungstag der Anmeldung:
**26.01.2022 Patentblatt 2022/04**

(73) Patentinhaber: **Unicorn Energy GmbH**
**73525 Schwäbisch Gmünd (DE)**

(72) Erfinder:
- **WEIGL, Jörg**
  **73525 Schwäbisch Gmünd (DE)**
- **FRIEDERICH, Felix**
  **73525 Schwäbisch Gmünd (DE)**
- **DÖRNDORFER, Johannes**
  **6675 Tannheimer Tal (AT)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
**DE-A1-102015 014 611**    **US-A- 5 697 221**
**US-A- 5 953 922**    **US-A1- 2007 261 756**
**US-A1- 2018 009 511**    **US-A1- 2019 078 696**

EP 3 942 218 B1

(52) Gemeinsame Patentklassifikation (CPC): (Forts.)
F17C 2221/012; F17C 2221/014; F17C 2221/033;
F17C 2223/0123; F17C 2223/036;
F17C 2225/0123; F17C 2250/032; F17C 2250/043;
F17C 2250/0439; F17C 2250/0452;
F17C 2250/0491; F17C 2260/038; F17C 2265/04;
F17C 2270/0168; Y02E 60/32

**Beschreibung**

Die vorliegende Erfindung betrifft eine austauschbare Kartusche zum Speichern eines Fluids. Die Erfindung betrifft des weiteren ein Kartuschen-System aus mindestens einer Kartusche und einer Ventilsteuerungseinheit sowie ein Verfahren zum Verbinden einer Kartusche mit einer weiteren Kartusche.

Die Speicherung von Wasserstoff (H2) in Druckbehältern ist bekannt. Wasserstoff dient als Energieträger oder -speicher und kann überall dort eingesetzt werden, wo Energie benötigt wird oder zur Verfügung steht. Als Wasserstoffantrieb wird eine Antriebsart bezeichnet, die Wasserstoff als Treibstoff nutzt. In der Regel wird der Wasserstoff dazu als Energieträger für ein nachgeordnetes Antriebssystem eingesetzt.

Eine Voraussetzung für die breite Anwendung von Wasserstoffantrieben ist die Herstellung einer Versorgungsinfrastruktur. Dazu soll an Wasserstofftankstellen der Energievorrat mobiler Wasserstoffverbraucher, z.B. Brennstoffzellenfahrzeuge, aufgefüllt werden. Zum einen besteht jedoch bis heute kein praktisch nutzbares Netz durch die geringe Anzahl von Wasserstofftankstellen und zum anderen erfordert das Tanken von Wasserstoff in einigen Ländern eine spezielle Schulung im Hinblick auf Sicherheitsaspekte beim Umgang mit unter Hochdruck stehenden reaktionsfreudigen Gasen, wie Wasserstoff.

Die Speicherung von Wasserstoff, insbesondere für den mobilen Einsatz, ist noch heute problematisch, da der Wasserstoff entweder gasförmig bei sehr hohen Drücken (200 bis 700 bar) in Druckbehältern oder in flüssiger Form bei extrem niedriger Temperatur (-253 °C) gespeichert werden muss. Dies ist notwendig, um möglichst viel des Gases auf vertretbarem Raum zu speichern (hohe Energiedichte). Für die Speicherung von Wasserstoff in kleinen Mengen, etwa in Fahrzeugen, werden wegen des geringen Gewichts heute ausschließlich Drucktanks bis 700 bar eingesetzt. Bei der Auslegung der Tanks und Leitungen sind auch sicherheitsrelevante Aspekte zu berücksichtigen, wie die Hochentzündlichkeit des Wasserstoffes oder seine Eigenschaft ein explosives Knallgas zu bilden.

Die US 5,953,922 offenbart eine modular kombinierbare Gaskartusche. Ausgehend hiervon werden erfindungsgemäß eine austauschbare Kartusche gemäß dem Hauptanspruch, ein Kartuschen-System gemäß Anspruch 13 sowie ein Verfahren zum Verbinden einer erfindungsgemäßen Kartusche gemäß Anspruch 15 vorgeschlagen.

Zunächst werden einige Begriffe erläutert.

Bei einer (Speicher-)Kartusche handelt es sich um einen Fluidspeicher zum Anschluss an einen Fluidverbraucher. Die Kartusche kann somit als austauschbare Versorgungsnetzkomponente eines Versorgungsnetzwerks eingesetzt werden. Die Kartusche kann insbesondere als Teil eines modular skalierbaren Fluidspeichers ausgebildet sein. Die Kartusche kann zudem wiederbefüllbar sein und insbesondere als mobiler Wasserstoffspeicher eingesetzt werden.

Unter einem Fluid wird ein Gas oder Gasgemisch oder eine Flüssigkeit verstanden. Bei dem Gas kann es sich bevorzugt um Wasserstoff, Sauerstoff, Stickstoff oder Erdgas handeln.

Ein Druckbehälter ist ein geschlossener Behälter, dessen Druck im Inneren über dem Umgebungsdruck liegt. Das Fluid wird in dem Druckbehälter gespeichert. Je nach Ausführungsform des Druckbehälters kann der Druck im Inneren bis 100 bar, bis 350 bar, bis 700 bar oder bis 1000 bar betragen.

Eine Anschlussfläche der Kartusche ist eine Fläche an einer Außenseite der Kartusche, die eine Transportschnittstelle für einen Transport/eine Übertragung des Fluids zu einer weiteren Anschlusskomponente (wie ein Fluidverbraucher, eine weitere Kartusche, eine Befüllvorrichtung, etc.) aufweist.

Unter einer Verbindungsleitung ist eine an den Druckbehälter angeschlossene Druckrohrleitung zu verstehen. Über die Verbindungsleitung kann der Druckbehälters somit befüllt oder entleert werden. Die Verbindungsleitung kann mit Hilfe eines als Teil eines Ventilsystems ausgebildeten ersten Absperrorgans verschlossen werden. Ist das in der Verbindungsleitung angeordnete erste Absperrorgan des Ventilsystems geschlossen, kann ein Fluid in dem Druckbehälter gespeichert werden. Ist das erste Absperrorgan geöffnet, kann der Druckbehälter befüllt oder entleert werden.

Ein Absperrorgan ist ein Bauteil, das dazu dient, in einer Rohrleitung den Volumenstrom anzuhalten oder durchzulassen. Das Absperrorgan kann unidirektional oder bidirektional sperrend sein. Das Absperrorgan kann als steuerbares Ventil ausgebildet sein, beispielsweise als Magnetventil. Ein Magnetventil ist ein Ventil, das durch einen Elektromagneten betätigt wird. Bei ausgeschaltetem Elektromagnet hält die Druckfeder das Ventil geschlossen, in dem sie den Ventilkolben gegen den Ventilsitz drückt.

Als Verjüngung wird eine Engstelle in einer Druckrohrleitung bezeichnet, bei der eine Querschnittsfläche der Druckrohrleitung reduziert ist. Dies kann durch allmähliches oder sprunghaftes Kleinerwerden der Druckrohrleitung erreicht werden. Auch ein Absperrorgan, wie beispielsweise ein Ventil, kann eine Verjüngung darstellen, wenn es zur Steuerung des Durchflusses des Fluids eine Reduktion der Querschnittsfläche bis hin zu einer vollständigen Schließung der Druckrohrleitung bewirkt.

Die Handhabung (z.B. Anschließen, Aufstecken oder Entfernen) einer Kartusche mit einem Druckbehälter weist einen sicherheitsrelevanter Aspekt auf, da in dem Druckbehälter eine erhebliche Energie gespeichert sein kann. Wird ein solcher Behälter unter Druck geöffnet, kommt es nicht nur zum Austritt des Fluids, sondern der Behälter kann durch den austretenden Gasimpuls raketenartig fortgeschleudert werden. Damit ein Verwender die Kartusche sicher und einfach austauschen kann, muss eine Kraftübertragung daher stets unterhalb eines festgelegten Maximalwerts bleiben. Die Kraft gibt an, wie stark ein Körper auf einen anderen Körper einwirkt. Der Druck beschreibt die Kraft, die auf eine Fläche einwirkt. Die (Druck)Kraft F wird berechnet aus dem Produkt des Drucks p und der Fläche A:

$$F = p\,A\,.$$

Der Erfindung liegt die Erkenntnis zugrunde, dass sich die Kraftübertragung bei gegebenen Druck begrenzen lässt, indem die Fläche A möglichst klein gehalten wird. Die Erfindung nimmt eine damit einhergehende Reduzierung der Durchflussrate (Volumen des Fluids pro Zeitspanne) in Kauf.

Erfindungsgemäß weist die Verbindungsleitung daher in Richtung der ersten Anschlussfläche eine Verjüngung auf.

Durch die in der Verbindungsleitung vorgesehene Verjüngung in Richtung der ersten Anschlussfläche wird die Querschnittsfläche der Druckrohrleitung verkleinert und somit die Kraftübertragung stets unterhalb eines festgelegten Maximalwertes gehalten. Bei der Handhabung der Kartusche auftretende Kräfte (beispielsweise beim Öffnen des Druckbehälters) können somit durch eine vergleichsweise leichte Verriegelung kompensiert werden.

Aufgrund eines Druckverlustes durch Wandreibung und Dissipation in Rohrleitungen ist eine Querschnittsreduzierung entlang der gesamten Verbindungsleitung nachteilig. Es ist daher zusätzlich von Vorteil, die Verjüngung in einem Endbereich der Verbindungsleitung oder unmittelbar vor der ersten Anschlussfläche in der Verbindungsleitung anzuordnen. In einer vorteilhaften Ausführungsform der Erfindung ist der Durchmesser der Verbindungsleitung im Bereich der Verjüngung um mindestens 50 %, vorzugsweise 60 %, weiter vorzugsweise 80%, reduziert.

Gemäß einer Ausführungsform kann die Kartusche eine Durchgangsleitung aufweisen. Die Durchgangsleitung verbindet die erste Anschlussfläche mit einer auf der Außenseite der Kartusche angeordneten zweiten Anschlussfläche. In der als Druckrohrleitung ausgebildeten Durchgangsleitung ist ein zweites Absperrorgan des Ventilsystems angeordnet. Ist das zweite Absperrorgan geschlossen, steht die erste Anschlussfläche nicht in einer Fluidverbindung mit der zweiten Anschlussfläche. Ist das zweite Absperrorgan geöffnet, kann die Durchgangsleitung als eine sogenannte "Bypassleitung" für den Transport eines Fluids unter Umgehung des Druckbehälters und eines darin gespeicherten Fluids, verwendet werden. Die Durchgangsleitung kann als Bypassleitung verwendet werden, wenn beispielsweise eine an die Kartusche angeschlossene weitere Kartusche befüllt oder entleert werden soll. Über die Durchgangsleitung kann eine parallele oder sequentielle Leerung/Befüllung mehrerer Kartuschen erfolgen.

Die Durchgangsleitung kann zumindest teilweise als Teil der Verbindungsleitung ausgebildet sein. Auf diese Weise ist ein auf die Druckrohrleitungen abfallendes Volumen der Kartusche möglichst gering, was die Ausbildung eines verhältnismäßig größeren Druckbehälters erlaubt. Dies ermöglicht außerdem die Ausbildung einer einzigen Transportschnittstelle an der ersten Anschlussfläche der Kartusche. In dieser Ausführungsform kann der gemeinsame Teil der Durchgangs- und Verbindungsleitung die erfindungsgemäße Verjüngung aufweisen.

Die Durchgangsleitung kann zusätzlich als mechanische Strebe ausgebildet sein. Die mechanische Strebe weist eine hohe mechanische Belastbarkeit auf, wodurch die Stabilität der Kartusche verbessert wird. Die Kartusche ist somit auch gegenüber hohen mechanischen Belastungen, z.B. bei einem Unfall, stabil.

Die Durchgangsleitung kann im Wesentlichen innerhalb des Druckbehälters angeordnet sein. Diese Anordnung der Durchgangsleitung erlaubt aufgrund der geringeren Druckdifferenz eine verhältnismäßig kleinere Auslegung und Dimensionierung der Druckrohrleitung und der darin angeordneten Absperrorgane, was insgesamt zu einer Platzersparnis innerhalb der Kartusche führt. Weiter vorzugsweise ist die Durchgangsleitung entlang einer Mittelachse des Druckbehälters ausgebildet. Auf diese Weise kann die Kartusche möglichst kompakt gehalten werden.

In einem gemeinsamen Abschnitt der Durchgangs- und Verbindungsleitung kann ein drittes Absperrorgan des Ventilsystems angeordnet sein. Durch die Verwendung des zweiten und dritten Absperrorgans, wobei das zweite Absperrorgan in der Durchgangsleitung und das dritte Absperrorgan in dem gemeinsamen Abschnitt der Durchgangs- und Verbindungsleitung angeordnet ist, kann ein Fluid wahlweise über eine der beiden Anschlussflächen der Kartusche übertragen werden und zum Druckbehälter gelangen. Der nicht-gemeinsame Teil der Durchgangsleitung kann zudem als Verbindungsleitung verwendet werden, wenn eine zweite Verjüngung in der Durchgangsleitung in Richtung der zweiten Anschlussfläche vorgesehen ist. Die Kartusche kann somit besonders flexibel eingesetzt werden und beidseitig mit Anschlusskomponenten gekoppelt werden.

In einer Ausführungsform kann das Ventilsystem innerhalb des Druckbehälters angeordnet sein. Diese Anordnung erlaubt eine geringe Dimensionierung sämtlicher zur Ventiltechnik gehörender Komponenten. Das Ventilsystem umfasst ein erstes, zweites und/oder drittes Absperrorgan und kann als Einheit ausgebildet sein, beispielsweise in Form eines Drei-Wege-Ventils.

Die Kartusche kann ein im Wesentlichen zylinderförmiges Gehäuse mit einer Mantelfläche und zwei Stirnflächen aufweisen, wobei die erste Anschlussfläche an einer der Stirnflächen angeordnet ist. Die zweite Anschlussfläche kann an der gegenüberliegenden Stirnseite angeordnet sein. Auf diese Weise kann die Durchgangsleitung geradlinig entlang einer Mittelachse des zylinderförmigen Gehäuses verlaufen. Da Druckbehälter in der Regel eine zylindrische Form aufweisen, kann das zylinderförmige Gehäuse als Hülle an den Druckbehälter verwendet werden, was eine kompakte Bauweise der Kartusche erlaubt. Das zylinderförmige Gehäuse kann als Kohlefaserummantelung, Glasfaserummantelung oder aus (gespritztem) Plastik ausgebildet sein. Die zylinderförmige Hülle kann den Druckbehälter zusätzlich verstärken und/oder vor externen Einflüssen schützen.

Gemäß einer weiteren Ausführungsform kann die Kartusche in einem Bereich der ersten Anschlussfläche ein Verriegelungselement zur Herstellung einer sicheren Verbindung mit einem Fluidverbraucher und/oder einer weiteren Kartusche aufweisen. Vor der Abgabe eines in dem Druckbehälter gespeicherten Fluids an einen an die Kartusche angeschlossenen Fluidverbraucher, (beispielsweise eine Brennstoffzelle) sollte die austauschbare Kartusche möglichst rasch und gleichzeitig sicher an dem Fluidverbraucher befestigt werden können. Es sind diverse Druckbehälter-Schnellverschlüsse zu diesem Zweck bekannt, wie beispielsweise ein Bajonett-Verschluss. Das Verriegelungselement ist vorzugsweise als Permanentmagnet ausgebildet. Der Permanentmagnet erlaubt ein einfaches Verbindung und Lösen der Kartusche, wobei die Haltekraft je nach Auslegung des Permanentmagneten auf die Anwendung eingestellt werden kann. In diesem Fall sollte eine an die Kartusche anzuschließende Anschlusskomponente entsprechend ausgebildet sein und ebenfalls ein magnetisches Verriegelungselement nahe einer Anschlussfläche aufweisen. Vorzugsweise ist der Permanentmagnet als Ringmagnet ausgebildet, der sich um die Transportschnittstelle in dem Bereich der ersten Anschlussfläche erstreckt. Durch die Ring-Symmetrie kann die Kartusche in jeder Orientierung an eine entsprechend ausgebildete Anschlusskomponente angeschlossen und verriegelt werden. Die Kartusche kann analog ein weiteres Verriegelungselement im Bereich der zweiten Anschlussfläche aufweisen. Die erste/und oder zweite Anschlussfläche können als Stecker bzw. Buchse für eine Steckverbindung ausgebildet sein.

Des weiteren ist in dem Bereich der ersten Anschlussfläche eine Übertragungseinheit ausgebildet, die eine mit einer Kommunikationseinheit verbundene Kommunikationsschnittstelle aufweist. Über die mit Kommunikationseinheit verbundene Kommunikationsschnittstelle kann die Kartusche mit einem angeschlossenen Fluidverbraucher oder einer angeschlossenen weiteren Kartusche kommunizieren und/oder gesteuert werden. Über die Kommunikationsschnittstelle können alle notwendigen technischen Daten und Parameter zwischen der Kartusche und weiteren Versorgungsnetzkomponenten ausgetauscht werden. So kann die Kartusche als Fluidspeicher in einem Versorgungsnetz beispielsweise über die Kommunikationsschnittstelle zu- und abgeschaltet werden.

Die Kommunikationsschnittstelle kann zudem als Stromübertragungsschnittstelle zur Versorgung der Kartusche mit elektrischer Energie ausgebildet sein. Auf diese Weise steht die Kartusche mit benachbarten Versorgungsnetzkomponenten, wie einem angeschlossenen Fluidverbraucher oder einer weiteren Kartusche, in einem elektrischen Kontakt. Über die Stromübertragungsschnittstelle können sämtliche Komponenten der Kartusche, wie beispielsweise das Ventilsystem, mit Spannung versorgt werden. Die Kartusche benötigt dementsprechend keinen eigenen Energiespeicher. Die Kommunikationsschnittstelle und/oder die Stromübertragungsschnittstelle können als drahtlose Schnittstellen ausgebildet sein. Die Kommunikationsschnittstelle und die Stromübertragungsschnittstelle können ebenfalls rotationssymmetrisch ausgebildet sein, um die Kartusche in jeder Orientierung zu verwenden. Die Stromübertragungsschnittstelle kann auch separat von der Kommunikationsschnittstelle ausgebildet sein. Die Kartusche kann auch an der zweiten Anschlussfläche eine Übertragungseinheit mit einer Kommunikationsschnittstelle und/oder Stromübertragungsschnittstelle aufweisen.

Gemäß einer Ausführungsform der Erfindung kann die Kommunikationseinheit zu Zwecken einer Betätigung eines oder mehrerer Absperrorgane mit dem Ventilsystem verbunden sein. Ein gezieltes Öffnen und Schließen der einzelnen Absperrorgane kann somit über die Kommunikationsschnittstelle von außen gesteuert werden. Die Kommunikationseinheit kann so ausgebildet sein, dass die Absperrorgane je nach Zustand der Kartusche (z.B.: Füllstand) und ggf. zusätzlich empfangener Signale geöffnet oder geschlossen werden.

Die als Teil der ersten Übertragungseinheit ausgebildete erste Kommunikationsschnittstelle und eine als Teil einer zweiten Übertragungseinheit ausgebildet zweiten Kommunikationsschnittstelle können über die Kommunikationseinheit miteinander verbunden sein. Die erste und zweite Übertragungseinheit können jeweils in dem Bereich der ersten und zweiten Anschlussfläche der Kartusche angeordnet sein und Kommunikationssignale somit auch über die Kartusche hinweg übertragen werden.

In einer weiteren Ausführungsform kann die Kommunikationseinheit mit mindestens einem Sensor verbunden sein, wobei der Sensor als ein Innentemperatursensor, ein Außentemperatursensor, ein Drucksensor, ein Gassensor oder ein Gaslecksensor ausgebildet ist. Die Verbindung des Sensors mit der Kommunikationseinheit ermöglicht ein bedarfsmäßiges oder automatisches Auslesen der Sensoren, welches bei der Steuerung des Ventilsystems berücksichtigt wird. Die Kartusche kann ferner einen mit der Kommunikationseinheit verbundenen Füllstandsensor aufweisen oder den Füllstand basierend auf den Werten des Druck- und Innentemperatursensors ermitteln. Der Drucksensor kann als Dehnmessstreifen ausgebildet sein und an der Außenwand des Druckbehälters angeordnet sein. Der Innentemperatursensor zur Ermittlung der Gastemperatur ist vorzugsweise von außen an dem Druckbehälter angeordnet, um über die Behältertemperatur Rückschlüsse auf die Gastemperatur zu erhalten. Der Gassensor kann zur Ermittlung des Gases, falls eine Kartusche für unterschiedliche Gase oder Gasgemische verwendet wird, eingesetzt werden.

Über eine an der Außenseite der Kartusche angeordnete Füllstandsanzeige kann der Füllstand der Kartusche angezeigt werden. Die Füllstandsanzeige kann als elektronisches Papier ausgebildet sein. Zur Energieversorgung der Füllstandsanzeige kann eine Solarzelle verwendet werden. Zur einfachen Identifizierung der Kartusche kann eine Unique Identification Number (abgekürzt: UIN) vorgesehen sein. Zur Bestimmung des Ortes der Kartusche kann zusätzlich ein GPS-Modul vorgesehen sein. Die UIN und das GPS-Modul können auch zur Diebstahlsicherung der Kartusche eingesetzt werden. Es kann ferner ein Kühl- und/oder Heizelement in der Kartusche vorgesehen sein, um eine gewünschte Temperatur des Fluids einzustellen.

In einer Ausführungsform kann die Kartusche derart ausgebildet sein, dass das erste Absperrorgan bei einer positiven Druckdifferenz zwischen der Verbindungsleitung und dem Druckbehälter öffnet. Eine positive Druckdifferenz liegt beispielsweise beim Befüllen der Kartusche vor. Die Kartusche kann somit auf eine Befüllvorrichtung aufgesteckt werden und der Befüllvorgang startet quasi automatisch.

Gemäß einer weiteren Ausführungsform der Erfindung kann die Kartusche derart ausgebildet sein, dass das erste Absperrorgan bei einer mechanischen Trennung der Kartusche von einem Fluidverbraucher, einer Befüllvorrichtung oder einer weiteren Kartusche automatisch schließt. Die Kartusche ist somit einerseits im Falle eines unbeabsichtigten Lösens geschützt, wobei durch das geschlossene Absperrorgan ein restliches Fluid im Druckbehälter gespeichert bleibt und andererseits kann eine volle oder halbvolle Kartusche jederzeit abgesteckt/getrennt werden, ohne nennenswerte Verluste des gespeicherten Fluids in Kauf nehmen zu müssen.

Die Erfindung betrifft des weiteren ein Kartuschen-System aus mindestens einer erfindungsgemäßen Kartusche und einer Ventilsteuerungseinheit zur Steuerung des Ventilsystems über die Kommunikationseinheit. Dazu kann ein Fluidverbraucher an die erste Anschlussfläche der Kartusche angeschlossen sein. Des weiteren kann die (externe) Ventilsteuerungseinheit als Teil des Fluidverbrauchers ausgebildet sein. Die Verwendung einer (externen) Ventilsteuerungseinheit ermöglicht die Steuerung der Absperrorgane beim Entleeren der Kartusche oder bei der Verwendung der Kartusche im Bypass-Modus. Über die Ventilsteuerungseinheit kann je nach Bedarf eine sequentielle oder parallele Leerung von mehreren Kartuschen stattfinden. Die Ventilsteuerungseinheit kann des weiteren über die Kommunikationseinheit (und Kommunikationsschnittstelle) beliebige Sensordaten, den Füllstand und/oder die UID der Kartusche auslesen.

Das Kartuschen-System kann eine an die Kartusche angeschlossene weitere Kartusche umfassen, wobei eine erste Anschlussfläche der weiteren Kartusche mit der zweiten Anschlussfläche der Kartusche verbunden ist. In einer möglichen Ausführungsform der Erfindung umfasst das Kartuschen-System eine Vielzahl aneinander angeschlossener Kartuschen. Durch die Verbindung mehrerer Kartuschen kann ein Fluidspeicher einstellbarer Größe geschaffen werden. Dadurch können modulare Tankeinheiten auch bei hohen Drücken realisiert werden, die einfach und sicher zusammengesteckt und voneinander getrennt werden können. Durch das Aneinanderstecken kann die Kapazität eines solchen Drucktanks nahezu beliebig erweitert und skaliert werden.

Die Erfindung betrifft außerdem ein Verfahren zum Verbinden einer erfindungsgemäßen Kartusche mit einer weiteren erfindungsgemäßen Kartusche mit den Schritten:

- Herstellen einer mechanischen Verbindung zwischen einer zweiten Anschlussfläche der Kartusche und einer ersten Anschlussfläche der weiteren Kartusche,

- Herstellen einer elektronischen Verbindung zwischen einer zweiten Übertragungseinheit der Kartusche und einer ersten Übertragungseinheit der weiteren Kartusche,

- Herstellen einer Verbindung zwischen einer ersten Kommunikationseinheit der Kartusche und einer zweiten Kommunikationseinheit der weiteren Kartusche zur Betätigung der Ventilsysteme über die erste und zweite Kommunikationseinheit.

Die Herstellung einer mechanischen Verbindung zwischen den jeweiligen Anschlussflächen der Kartuschen kann durch Auf- bzw. Einstecken (Steckverbindung) erfolgen. Dazu können die Anschlussflächen und ggf. die Übertragungseinheiten nach dem Stecker/Buchse-Prinzip ausgebildet sein. Die Verbindungsstärke kann zusätzlich über ein oder mehrere Verriegelungselemente eingestellt werden. Eine elektronische Verbindung kann über eine als Teil der Überragungseinheiten ausgebildeten Stromübertragungsschnittstellen hergestellt werden. Die Verbindung der Kommunikationseinheiten kann über die Kommunikationsschnittstellen erfolgen. Die Kartuschen können somit nach dem sogenannten "Plug and Play"-Prinzip beliebig miteinander verbunden und wieder getrennt werden. Wie dargelegt, wird die Verwendung der Kartuschen als Fluidspeicher durch Hardware und Software unterstützt.

Das erfindungsgemäße Verfahren kann mit weiteren im Zusammenhang mit der erfindungsgemäßen Kartusche oder des erfindungsgemäßen Kartuschen-Systems beschriebenen Merkmalen fortgeführt werden. Die erfindungsgemäße Kartusche und das erfindungsgemäße Kartuschen-System können mit weiteren im Zusammenhang mit dem erfindungsgemäßen Verfahren beschriebenen Merkmalen fortgebildet werden.

Weitere Vorteile und Ausgestaltungen der Erfindung ergeben sich aus den Unteransprüchen, der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung stark schematisch und nicht maßstabsgerecht dargestellt und wird im folgenden unter Bezugnahme auf die Zeichnung ausführlich beschrieben.

Figur 1    zeigt eine schematische Ansicht einer erfindungsgemäßen Kartusche.

Figur 2    zeigt eine schematische Ansicht eines erfindungsgemäßen Kartuschen-Systems mit einer Kartusche, einer weiteren Kartusche und einem Fluidverbraucher a) vor dem Zusammenstecken und b) in einem zusammengesteckten Zustand.

Figur 3    zeigt eine schematische Darstellung einer Verwendung einer erfindungsgemäßen Kartusche als Wasserstoffspeicher für ein Fahrrad in drei Szenarien.

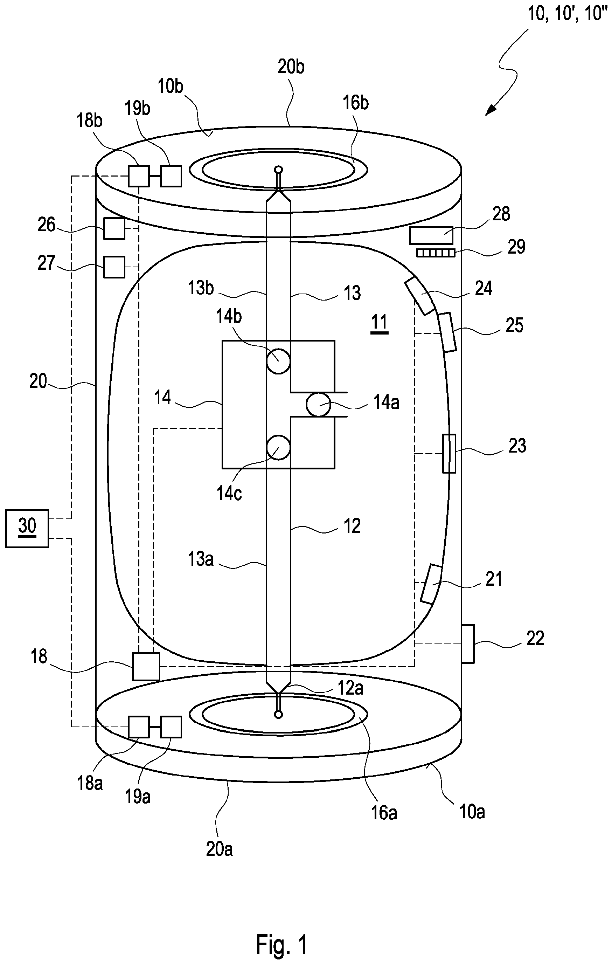

Figur 1 zeigt eine erfindungsgemäße austauschbare Kartusche 10 zum Speichern eines Fluids in einer vorteilhaften Ausführungsform. Gleichartige Elemente weiterer erfindungsgemäßer Kartuschen 10', 10" sind mit entsprechenden gestrichenen Bezugszeichen versehen.

Die im Wesentlichen zylinderförmige Kartusche 10 erstreckt sich zwischen einer ersten Anschlussfläche 10a und einer zweiten Anschlussfläche 10b und weist im Inneren einen Druckbehälter 11 zur Aufnahme eines Fluids auf. Die Kartusche 10 ist derart ausgebildet, dass ein Fluid in dem Druckbehälter 11 aufgenommen, gespeichert und bei Bedarf wieder abgegeben werden kann. Die Kartusche 10 ist somit für einen Transport und eine Lagerung eines unter Druck stehenden Fluids geeignet.

Die Kartusche 10 weist ein Gehäuse 20 mit einer im Wesentlichen zylinderförmigen Gehäuseform mit zwei gegenüberliegenden Stirnflächen auf. An den gegenüberliegenden Stirnflächen sind die erste und zweite Anschlussfläche 10a, 10b ausgebildet. Über die erste und/oder zweite Anschlussfläche 10a, 10b kann die Kartusche 10 mit einer entsprechend ausgebildeten Anschlusskomponente verbunden werden. Bei der entsprechend ausgebildeten Anschlusskomponente kann es sich um einen Fluidverbraucher, eine oder mehrere weitere Kartuschen 10', 10", eine Befüllvorrichtung oder einen Wechselautomat handeln. Für die erfindungsgemäße Kartusche 10 ist jedoch bereits eine (erste) Anschlussfläche 10a ausreichend.

Die austauschbare Kartusche 10 umfasst einen Druckbehälter 11 mit einer im Wesentlichen zylindrischen Form. Der Druckbehälter 11 kann jedoch auch eine Kugelform aufweisen. Der Druckbehälter 11 kann aus Metall oder Kunststoff bestehen. Der Druckbehälter 11 erstreckt sich über nahezu die gesamte Breite des Gehäuses 20 der Kartusche 11, um ein möglichst großes Speichervolumen zu schaffen. Je nach Verwendungszweck kann der Druckbehälter 11 für unterschiedliche Drücke ausgelegt sein. Das umliegende Gehäuse 20 kann als Kohlefaserummantelung, Glasfaserummantelung oder aus (gespritztem) Plastik ausgebildet sein, um den Druckbehälter 11 vor äußeren Einflüssen zu schützen und/oder eine zusätzlich eine Verstärkung bei hohen Drücken zu bewirken. Bei dem zu speichernden Fluid kann es sich um ein Gas, wie beispielsweise Wasserstoff, Sauerstoff, Stickstoff oder Erdgas, oder um ein Gasgemisch oder eine Flüssigkeit handeln.

In der gezeigten Ausführungsform ist der Druckbehälter 11 der Kartusche 10 mit Wasserstoff gefüllt. Die Kartusche kann somit als (wiederbefüllbarer) Wasserstoffspeicher zum Anschluss an eine Brennstoffzelle als Fluidverbraucher verwendet werden. Der Druckbehälter 11 ist für die Verwendung als Wasserstoffspeicher für Drücke bis zu 700 bar ausgelegt.

Ausgehend von dem Druckbehälter 11 erstreckt sich eine Verbindungsleitung 12 bis zu einer ersten Anschlussfläche 10a auf einer Außenseite der Kartusche 10. Über die als Druckrohrleitung ausgebildete Verbindungsleitung 12 steht der Druckbehälter 11 mit einer an die Anschlussfläche 10a angeschlossenen Anschlusskomponente in einer Fluidverbindung. Über die Verbindungsleitung 12 kann ein Fluid von dem oder zu dem Druckbehälter 11 transportiert werden. In der Verbindungsleitung 12 ist ein erstes Absperrorgan 14a als Teil eines Ventilsystems 14 angeordnet. Das erste Absperrorgan 14a ist in dieser Ausführungsform als Magnetventil ausgebildet und wird von einem Elektromagneten (nicht dargestellt) gesteuert. Ist das erste Absperrorgan 14a geöffnet, kann der Druckbehälter 11 über die Verbindungsleitung 12 gefüllt oder entleert werden. Ist das erste Absperrorgan 14a geschlossen, kann ein Fluid in dem Druckbehälter 11 gespeichert werden.

Um zu gewährleisten, dass ein Verwender die Kartusche 10 sicher verwenden kann, d.h. beispielsweise die Kartusche 10 an eine Anschlusskomponente anschließen oder von dieser entfernen, muss die Kraftübertragung bei der Verwendung der Kartusche 10 (wie Befüllung bzw. Entleerung des Druckbehälters 11) unterhalb eines festgelegten Maximalwerts bleiben. Dazu ist erfindungsgemäß die Querschnittsfläche der Verbindungsleitung entsprechend reduziert. Die Verbindungsleitung 12 weist dazu eine Verjüngung 12a auf. Je nach festgelegtem Maximalwert für die Kraftübertragung ist ein Durchmesser der Verbindungsleitung im Bereich der Verjüngung um mehr als 80%. Die Verjüngung 12a kann an jeder Stelle in der Verbindungsleitung 12 angeordnet sein, es ist jedoch vorteilhaft, die Verjüngung 12a erst unmittelbar vor dem Ende der Verbindungsleitung 12 nahe der ersten Anschlussfläche 10a anzuordnen, um Verluste innerhalb der Druckrohrleitung zu verhindern. Die erfindungsgemäße Verjüngung gewährleistet, dass ein Verwender die Kartusche 10 jederzeit sicher handhaben kann.

Die Kartusche 10 ist ferner derart ausgebildet, dass das erste Absperrorgan 14a bei einer positiven Druckdifferenz zwischen der Verbindungsleitung 12 und dem Druckbehälter 11 automatisch öffnet. Auf diese Weise kann die Kartusche 10 schnell und einfach befüllt werden.

Die Kartusche 10 weist außerdem eine Durchgangsleitung 13 auf. Die ebenfalls als Druckrohrleitung ausgebildete Durchgangsleitung 13 erstreckt sich von der ersten Anschlussfläche 10a zu der zweiten Anschlussfläche 10b. Die Durchgangsleitung 13 weist in dieser Ausführungsform einen gemeinsamen ersten Abschnitt 13a mit der Verbindungsleitung 12 auf und ist als mechanische Strebe ausgebildet, beides ist jedoch nicht zwingend erforderlich. In diesem ersten Abschnitt 13a der Durchgangsleitung 13 ist diese als Teil der Verbindungsleitung 12 ausgebildet und in einem zweiten Abschnitt 13b schafft die Durchgangsleitung 13 eine Verbindung zwischen der Verbindungsleitung 12 und der zweiten Anschlussfläche 10b. Die Durchgangsleitung 13 weist aus dem gleichen Grund wie die Verbindungsleitung 12 in dem ersten und zweiten Abschnitt 13a, 13b jeweils eine Verjüngung auf.

In der Durchgangsleitung 13 ist ein als Teil des Ventilsystems 14 ausgebildetes zweites Absperrorgan 14b angeordnet. Das zweite Absperrorgan 14b ist im zweiten Abschnitt 13b der Durchgangsleitung angeordnet und erlaubt es die Durchgangsleitung 13 zu verschließen. Bei geschlossenem zweitem Absperrorgan 14b, kann die Kartusche wie vorstehend beschrieben verwendet werden. Bei geöffnetem zweiten Absperrorgan 14b und geschlossenem ersten Absperrorgan 14a, kann die Durchgangsleitung 13 als Bypassleitung unter Umgehung des Druckbehälters 11 zum Fluid-Transport verwendet werden.

Die Durchgangsleitung 13 kann ferner ein als Teil des Ventilsystems 14 ausgebildetes drittes Absperrorgan 14c aufweisen. Das dritte Absperrorgan 14c ist in dem gemeinsamen Abschnitt 13a der Durchgangs- und Verbindungsleitung 12, 13 angeordnet. Bei einer geschlossenen Stellung des dritten Absperrorgans 14c und gleichzeitig geöffnetem ersten und zweiten Absperrorgan 14a, 14b kann der zweite Abschnitt 13b der Durchgangsleitung 13 sozusagen als Verbindungsleitung verwendet werden und die Kartusche 10 kann auch über eine Transportschnittstelle der zweiten Anschlussfläche 10b befüllt oder entleert werden.

Das erste, zweite und dritte Absperrorgan 14a, 14b, 14c sind Teil des Ventilsystems 14, das mit der einer Kommunikationseinheit 18 verbunden ist und von dieser gesteuert werden kann. Die einzelnen Absperrorgane 14a, 14b, 14c können von der Kommunikationseinheit 18 einzeln oder in Kombination betätigt werden. Die Kommunikationseinheit 18 ist dazu mit einer externen Ventilsteuerungseinheit 30 verbunden. Die Verbindung zwischen der Ventilsteuerungseinheit 30 und der Kommunikationseinheit 18 kann auch über eine nachstehend erläuterte Kommunikationsschnittstelle 18a, 18b erfolgen. Vorzugsweise ist die Ventilsteuerungseinheit 30 als externe Komponente ausgebildet, beispielsweise als Teil eines an die Kartusche 10 angeschlossenen Fluidverbrauchers.

In der gezeigten Ausführungsform weist die Kartusche 10 eine erste im Bereich der ersten Anschlussfläche 10a angeordnete erste Übertragungseinheit 20a und eine im Bereich der zweiten Anschlussfläche 10b angeordnete zweite Übertragungseinheit 20b auf. Es ist jedoch für eine Verwendung der erfindungsgemäßen Kartusche 10 bereits eine (erste) Übertagungseinheit 20a ausreichend. Die erste und zweite Übertragungseinheit 20a, 20b erstrecken sich jeweils um eine am Ende der Verbindungsleitung 12 und ggf. an den Enden der Durchgangsleitung 13 ausgebildete Transportschnittstelle(n), über die das Fluid transportiert werden kann. Die Anschlussflächen 10a, 10b samt Übertragungseinheiten 20a, 20b können nach dem Stecker/Buchse-Prinzip ausgebildet sein. Die Kartusche 10 kann somit mit einer entsprechend ausgebildeten Anschlusskomponente einfach zusammengesteckt werden.

Über die Übertragungseinheit 20a, 20b kann sichergestellt werden, dass eine Übertragung des Fluids nur erfolgt, wenn eine angeschlossene Anschlusskomponente als kompatibel eingestuft wird. Die Übertragungseinheit 20a weist in diesem Ausführungsbeispiel dazu eine mit der Kommunikationseinheit 18 verbundene Kommunikationsschnittstelle 18a auf. Die Kommunikationsschnittstelle 18a dient zur Kommunikation der Kartusche 10' einer angeschlossenen gleichartig ausgebildeten Anschlusskomponente, wie einer weiteren Kartusche 10', 10" oder einem Fluidverbraucher. Die Übertragungseinheit 20 a weist in dieser Ausführungsform zudem eine Stromübertragungsschnittstelle 19a auf. Die Stromübertragungsschnittstelle 19a dient zur Versorgung der elektrischen Komponenten der Kartusche 10 mit elektrischer Energie. Die Kommunikations- und Stromübertragungsschnittstelle 18a, 19a können auch als gemeinsame Schnittstelle ausgebildet sein. Die Kommunikations- und/oder Stromübertragungsschnittstelle 18a, 19a kann drahtlos ausgebildet sein. In der gezeigten Ausführungsform der Kartusche 10 ist die Kommunikationseinheit 18 zusätzlich mit einer in der zweiten Übertragungseinheit 20b angeordneten zweiten Kommunikationsschnittstelle 18b verbunden, welche ebenfalls als Stromübertragungsschnittstelle 19b ausgebildet ist.

Um ein ungewolltes Lösen der Kartusche 10 von einer angeschlossenen Anschlusskomponente zu verhindern, weist die Kartusche 10 in dem Bereich der Anschlussflächen 10a, 10b zusätzlich jeweils ein Verriegelungselement 16a, 16b auf. In der gezeigten Ausführungsform sind die Verriegelungselemente 16a, 16b als ringförmige Permanentmagnete ausgebildet, die sich um die Transportschnittstelle herum erstrecken. Mittels des Permanentmagnets kann die Kartusche an einer entsprechend ausgebildeten Anschlusskomponente sicher angebracht und einfach wieder entfernt werden. Aufgrund der ringförmigen Ausbildung des Permanentmagnets kann die Verriegelung bei jeder Orientierung der Kartusche 10 erfolgen.

Wie bereits ausgeführt, erfolgt die Steuerung des Ventilsystems 14 über die Kommunikationseinheit 18 der Kartusche 10. Zu diesem Zweck kann die Kommunikationseinheit 18 zusätzlich mit diversen Sensoren der Kartusche 10 verbunden sein. In der gezeigten Ausführungsform weist die Kartusche 10 einen Innentemperatursensor 21, einen Außentemperatursensor 22, einen Drucksensor 23, einen Gassensor 24 und einen Gaslecksensor 25 auf. Basierend auf den empfangenen Messdaten der Sensoren kann die Kommunikationseinheit 18 die Steuerung des Ventilsystems 14 vornehmen. Die Sensordaten können ausgehend von der Kommunikationseinheit 18 auch über die Kommunikationsschnittstellen 18a, 18b hinaus übertragen werden.

Der Innentemperatursensor 21 dient einer Ermittlung der Gastemperatur im Inneren des Druckgasbehälters 11. Bevorzugt ist der Innentemperatursensor jedoch von außen auf dem metallischen Druckbehälter 11 aufgebracht, um über die Behältertemperatur Rückschlüsse auf die Gastemperatur zu ziehen. Der Außentemperatursensor 22 kann in Kombination mit dem Innentemperatursensor 21 ausgewertet werden, um Rückschlüsse über eine etwaige Erhöhung der Gastemperatur zu gewinnen. Der Drucksensor 23 kann als Dehnmessstreifen an der Außenwand des Druckbehälters 11 ausgebildet sein. Die Kombination von Drucksensor 23 und Innentemperatursensor 21 erlaubt eine Ermittlung des Füllstands des Druckbehälters 11. Der Gassensor 24 kann zur Ermittlung des Fluids herangezogen werden. Dies ist zweckdienlich, wenn dieselbe Kartusche 11 für unterschiedliche Fluide verwendet wird. Über den Gaslecksensor 25 kann eine Warnung im Falle eines Lecks oder einer Fehlfunktion der Kartusche 10 erfolgen.

Die dargestellte Kartusche 10 weist zudem an der Außenseite eine Füllstandsanzeige 28 auf. Diese Anzeigevorrichtung ist in Form eines Ink-Paper Displays ausgebildet und verfügt über eine eigene Stromversorgung in Form einer Solarzelle 29. Alternativ kann die Füllstandsanzeige 28 auch mit einer Stromversorgungsschnittstelle 19a, 19b verbunden sein. Als weitere Anzeigevorrichtung kann die Kartusche 10 eine (nicht dargestellte) Betriebszustandsanzeige in Form einer Multi-Color-Leuchtdiode aufweisen. Es ist somit von außen sofort ersichtlich, ob die Kartusche 10 gerade beispielsweise befüllt oder entleert wird.

Die dargestellte Kartusche 10 weist zudem ein Heizelement 26 und ein Kühlelement 27 auf. Je nach vorgesehener Verwendung der Kartusche 10 kann mithilfe des Heiz- oder Kühlelements 26, 27 ein gespeichertes Fluid auf eine vorbestimmte Temperatur eingestellt werden. Beispielsweise bei der Verwendung der Kartusche 10 als Sauerstoffspeicher, kann der Sauerstoff vor einer Applikation als Atemgas auf eine Temperatur nahe der Umgebungs- oder Körpertemperatur gebracht werden.

Die Kartusche 10 kann des weiteren eine (nicht dargestellte) Identifikationseinheit aufweisen, die eine eindeutige Identifikation der Kartusche 10 erlaubt. Dabei kann es sich beispielsweise um eine Unique Identification Number (UIN) handeln.

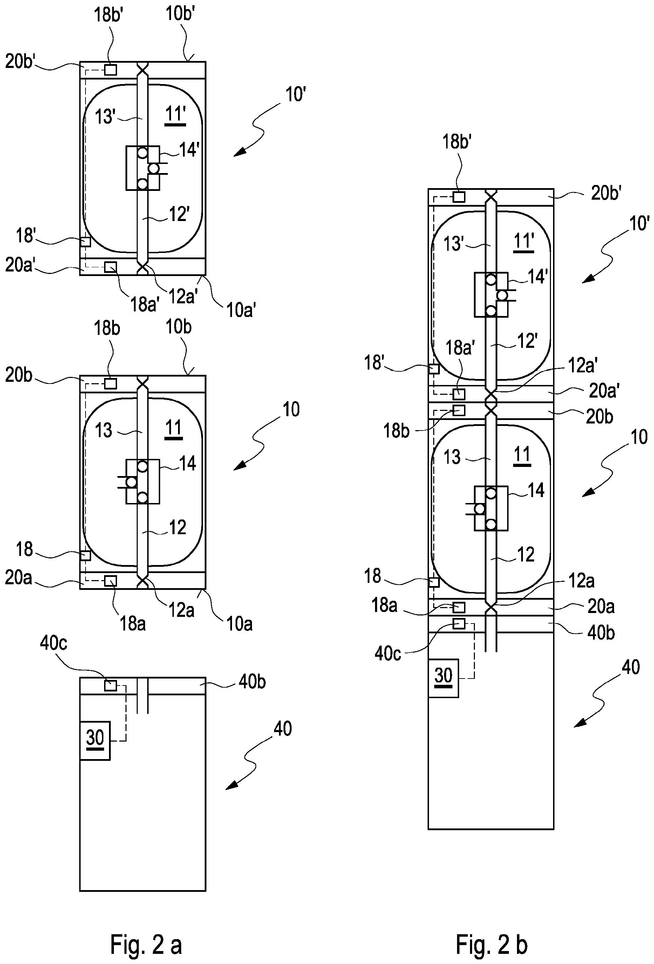

Figur 2 zeigt ein erfindungsgemäßes Kartuschen-System bestehend aus einer Kartusche 10, einer weiteren Kartusche 10' und einem Fluidverbraucher 40. Bei dem Fluidverbraucher 40 handelt es sich in dem dargestellten Ausführungsbeispiel um eine Brennstoffzelle. Die Kartuschen 10, 10' sind jeweils gemäß der in Figur 1 gezeigt Kartusche 10 ausgebildet, jedoch stark vereinfacht dargestellt. In Figur 2a ist das Kartuschen-System vor dem Zusammenstecken gezeigt. In Figur 2b ist das zusammengesteckte Kartuschen-System gezeigt.

Der in der Figur 2 unten angeordnete Fluidverbraucher 40 weist eine Übertragungseinheit 40b auf, die vergleichbar zu der voranstehend beschriebenen Übertragungseinheit 20b ausgebildet ist. Die Kartusche 10 kann daher mit der im Bereich der ersten Anschlussfläche 10a ausgebildeten Übertragungseinheit 20a nach dem Stecker/Buchse-Prinzip in die Übertragungseinheit 40b des Fluidverbrauchers 40 gesteckt werden. Die Verbindungsleitung 12 der eingesteckten Kartusche 10 steht dann in einer Fluidverbindung mit einer Druckrohrleitung des Fluidverbrauchers 40 und ein Fluid kann zwischen der Kartusche 10 und dem Fluidverbraucher 40 übertragen werden.

Nach dem gleichen Prinzip kann eine weitere Kartusche 10', die in einem Bereich der ersten Anschlussfläche 10a' eine erste Übertragungseinheit 20a' aufweist, auf eine in dem Bereich der zweiten Anschlussfläche 10b ausgebildete Übertragungseinheit 20b der Kartusche 10 gesteckt werden. Die weitere Kartusche 10' steht über ihre Verbindungsleitung 12' in einer Fluidverbindung mit der Durchgangsleitung 13 der Kartusche 10 und darüber auch mit dem Fluidverbraucher 40. Nach dem gleichen Prinzip können weitere Kartuschen 10" aufgesteckt werden, die zusammen einen skalierbaren Tank bilden.

Der Fluidverbraucher 40 weist des weiteren eine Ventilsteuerungseinheit 30 zur Steuerung der Ventilsysteme 14 und 14' auf. Die Übertragungseinheit 40b des Fluidverbrauchers 40 weist eine Kommunikationsschnittstelle 40c auf, die mit der Ventilsteuerungseinrichtung 30 verbunden ist (gestrichelte Linie in Figur 2). Bei dem in Figur 2 dargestellten Kartuschen-System sind sämtliche Kommunikationsschnittstellen 40c, 18a, 18b, 18a', 18b' auch als Stromübertragungsschnittstellen ausgebildet.

Ist die Kartusche 10' mit dem Fluidverbraucher 40 verbunden, steht die Kommunikationsschnittstelle 40c in Kontakt mit einer ersten Kommunikationsschnittstelle 18a der Kartusche 10'. Die erste Kommunikationsschnittstelle 18a wiederum steht über eine Kommunikationseinheit 18 in Kontakt mit einer zweiten Kommunikationsschnittstelle 18b der Kartusche 10 (gestrichelte Linie). Die Kommunikationseinheit 18 der Kartusche 10 steht somit in Kontakt mit der Ventilsteuerungseinheit 30. Nach dem gleichen Prinzip steht auch eine Kommunikationseinheit 18' der weiteren Kartusche in Kontakt mit der Kommunikationseinheit 18 der Kartusche 10 und der Ventilsteuerungseinheit 30.

Über die Ventilsteuerungseinheit 30 kann somit eine sequentielle oder parallele Leerung der Kartuschen 10, 10' gesteuert werden. Mittels der Durchgangsleitung 13 kann der Druckbehälter 11' der weiteren Kartusche 10' unter Umgehung des Druckbehälters 11 oder parallel dazu zum Transport eines Fluids eingesetzt werden. Eine an die zweite Anschlussfläche 10b der Kartusche 10 angeschlossene weitere Kartusche 10' kann über die Durchgangsleitung 13 der Kartusche 10 ein Fluid an einen an die erste Anschlussfläche 10a der Kartusche 10 angeschlossenen Fluidverbraucher 40 abgeben.

Die einzelnen Komponenten des zusammengesteckten Kartuschen-Systems können jederzeit, durch Überwindung der Haltekraft der (nicht dargestellten) Verriegelungselemente, voneinander getrennt werden. Die Kommunikationseinheiten 18, 18' sind so ausgebildet, dass die ersten Absperrorgane 14a, 14a' der Ventilsysteme 14, 14' in diesem Fall automatisch schließen und kein Fluid mehr aus den Druckbehältern 11, 11' austreten kann.

Das Verfahren zum Verbinden der Kartusche 10 und der weiteren Kartusche 10' erfolgt somit zunächst durch das Herstellen einer mechanischen Verbindung zwischen der zweiten Anschlussfläche 10b und der ersten Anschlussfläche 10a in Form einer Steckverbindung zwischen den Kartuschen 10, 10'. Sind die Kartuschen 10, 10' mechanisch miteinander verbunden, stehen sie in einer Fluidverbindung. Gleichzeitig wird eine elektronische Verbindung zwischen der zweiten Übertragungseinheit 20b und der ersten Übertragungseinheit 20a' hergestellt, wobei die elektronische Verbindung zwischen den als Stromübertragungsschnittstellen ausgebildeten Kommunikationsschnittstellen 18b und 18a' erfolgt. In dieser Ausführungsform der Kartuschen 10, 10' erfolgt ebenfalls gleichzeitig auch die Verbindung zwischen den Kommunikationseinheiten 18, 18' der Kartuschen 10, 10' über die Kommunikationsschnittstellen 18b, 18a'. Über die Kommunikationseinheiten 18, 18' können die Ventilsysteme 14, 14' der Kartuschen 10, 10' betätigt werden.

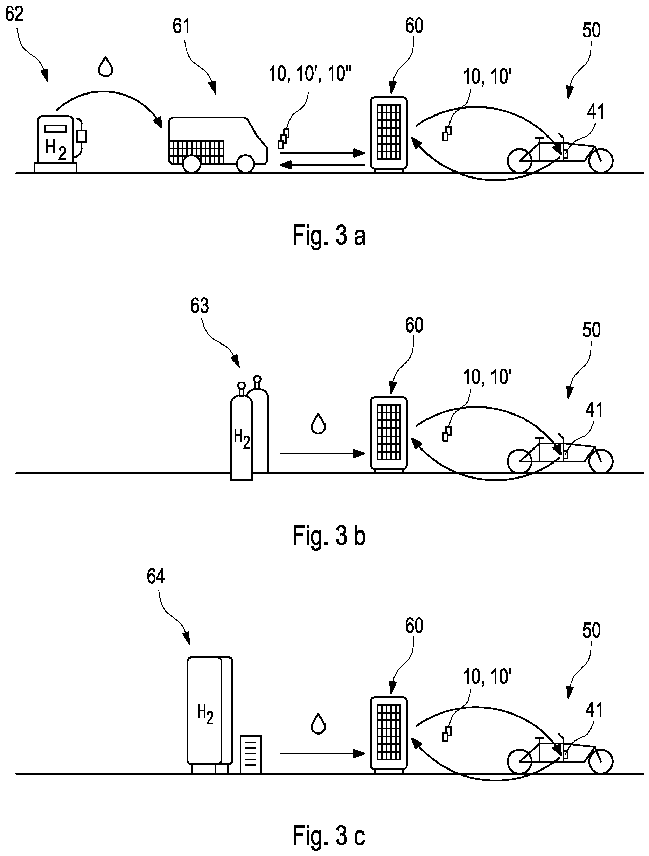

Figur 3 zeigt eine Verwendung der erfindungsgemäßen Kartusche 10, 10', 10" als wiederbefüllbarer Wasserstoffspeicher (H2-Speicher) für ein (Lasten-)Fahrrad 50 in drei verschiedenen Szenarien.

Fahrräder mit elektronischer Trittunterstützung sind bekannt, jedoch dauert eine komplette Akkuladung an einer Steckdose meist mehrere Stunden. Aus diesem Grund sind Fahrräder 70, die mit einer Brennstoffzelle 41 (als Fluidverbraucher) den Strom für den Elektromotor selbst produzieren, besonders vorteilhaft. Die am Fahrrad 70 untergebrachte Brennstoffzelle 41 muss dazu mit getanktem Wasserstoff versorgt werden. Dazu können eine oder mehrere erfindungsgemäße mit Wasserstoff befüllte Kartuschen 10, 10', 10" einfach und sicher auf die erfindungsgemäß ausgestaltete Brennstoffzelle 41 des Fahrrads 70 aufgesteckt werden und, nachdem der Wasserstoff verbraucht ist, genauso einfach und sicher wieder entfernt werden. Die Anzahl der benötigten Kartuschen 10, 10' hängt u.a. von der Strecke ab, die mit dem Fahrrad 70 zurückgelegt werden soll.

In jedem der in Figur 3 gezeigten Szenarien, erfolgt die Wasserstoff-Versorgung der Fahrräder 70 mit den austauschbaren Kartuschen 10, 10' über einen Wechselautomat 60. Bei dem Wechselautomaten 60 kann es sich beispielsweise um eine Tankstelle oder einen Kiosk handeln. In dem Wechselautomat 60 sind mit Wasserstoff gefüllte Kartuschen 10, 10', 10" in einer ausreichenden Anzahl hinterlegt. Ein (registrierter) Verwender kann die Kartuschen 10, 10' je nach Bedarf in der gewünschten Anzahl aus dem Wechselautomat 60 entnehmen bzw. gegen leere Kartuschen 10, 10' eintauschen. Wechselautomaten 60 haben gegenüber einer Wasserstofftankstelle 62 den Vorteil, dass sie je nach Bedarf flexibel, an nahezu beliebigen Orten und mit der erforderlichen Kapazität einfach aufgestellt werden können (unabhängig von einer Wasserstofftankstelle oder sonstiger Wasserstoff-Infrastruktur). Die erfindungsgemäße Kartusche 10, 10' kann von einem Verwender einfach und sicher selbst ausgetauscht werden. Das Ersetzen einer leeren Kartusche 10, 10' mit einer vollen Kartusche 10, 10' an einem Fahrrad 70 erfolgt somit durch einen Verwender innerhalb weniger Sekunden.

Der Wechselautomat 60 bzw. die darin hinterlegten Kartuschen 10, 10' müssen dazu regelmäßig mit Wasserstoff (H2) versorgt werden oder mit neuen oder wiederbefüllten Kartuschen befüllt werden.

In einem ersten Szenario (a) erfolgt die Lieferung der neuen bzw. wiederbefüllten Kartuschen 10, 10', 10" sowie die Abholung der leeren Kartuschen 10, 10', 10" mittels eines Transport-Fahrzeugs 61, das die Kartuschen 10, 10', 10" zwischen einer Wasserstoff-Tankstelle 62 und dem Wechselautomat 60 hin und her transportiert. An der Wasserstoff-Tankstelle 63 können die Kartuschen 10, 10', 10" einfach und schnell wiederbefüllt werden und von dort aus nach Bedarf an verschiedene Wechselautomaten 60 verteilt werden.

Gemäß einem zweiten Szenario (b) erfolgt die Wasserstoff-Versorgung mit Hilfe von externen Wasserstoff-Flaschen 63, die zum Wechselautomat 60 gebracht werden. Die Wasserstoff-Flaschen 63 können entweder unmittelbar mit dem Wechselautomat 60 verbunden werden und so zur Befüllung sämtlicher in dem Wechselautomat angeordneten Kartuschen 10, 10' (die nicht bereits vollständig gefüllt sind) dienen, oder die einzelnen Kartuschen 10, 10' werden vor Ort einzeln mit der Wasserstoff-Flasche 63 als Befüllvorrichtung verbunden und dann (wieder-)befüllt.

Gemäß einem dritten Szenario (c) erfolgt die Wasserstoff-Versorgung mit Hilfe einer Wasserstoff-Eigenproduktionsvorrichtung 64, die in räumlicher Nähe des Wechselautomaten 60 aufgestellt ist. Dies ist besonders bevorzugt, wenn der Wechselautomat 60 einen hohen und regelmäßigen Wasserstoff-Umsatz aufweist. Die Wasserstoff-Eigenproduktionsvorrichtung 64 kann gemäß Szenario (b) ebenfalls unmittelbar mit dem Wechselautomat 60 verbunden sein, oder zur Befüllung jeweils mit den einzelnen Kartuschen 10, 10' verbunden werden.

Alle drei Szenarien haben den Vorteil, dass auch zurückgegebene Kartuschen, die nicht vollständig entleert wurden, wieder (nach-)gefüllt werden können, ohne dass ein noch gespeicherter Rest-Wasserstoff verloren geht. In dem Wechselautomat 60 können zudem Kartuschen 10, 10' verschiedener Größe hinterlegt werden.

Die Erfindung stellt somit ein System sicher und einfach zu bedienender austauschbarer Kartuschen zur Fluidspeicherung unter Druck zur Verfügung.

**Patentansprüche**

1. Austauschbare Kartusche (10) zum Speichern eines Fluids, mit

   einem Druckbehälter (11) zur Aufnahme des Fluids,
   einer sich von dem Druckbehälter (11) bis zu einer ersten Anschlussfläche (10a) auf einer Außenseite der Kartusche (10) erstreckenden Verbindungsleitung (12), die in Richtung der ersten Anschlussfläche (10a) eine Verjüngung (12a) aufweist, und
   einem Ventilsystem (14), das ein in der Verbindungsleitung (12) angeordnetes erstes Absperrorgan (14a) umfasst,
   **dadurch gekennzeichnet, dass**
   in dem Bereich der ersten Anschlussfläche (10a) eine Übertragungseinheit (20a, 20b) ausgebildet ist, die eine mit einer Kommunikationseinheit (18) verbundene elektronische Kommunikationsschnittstelle (18a, 18b) aufweist.

2. Kartusche (10) nach Anspruch 1, mit einer Durchgangsleitung (13), die die erste Anschlussfläche (10a) mit einer auf der Außenseite der Kartusche (10) angeordneten zweiten Anschlussfläche (10b) verbindet, wobei ein zweites Absperrorgan (14b) des Ventilsystems (14) in der Durchgangsleitung (13) angeordnet ist und vorzugsweise die Durchgangsleitung (13) zumindest teilweise als Teil der Verbindungsleitung (12) ausgebildet ist.

3. Kartusche (10) nach Anspruch 2, bei der die Durchgangsleitung (13) im Wesentlichen innerhalb des Druckbehälters (11) angeordnet ist und vorzugsweise entlang einer Mittelachse des Druckbehälters (11) verläuft.

4. Kartusche (10) nach einem der Ansprüche 2 oder 3, bei der in einem gemeinsamen Teil (13a) der Durchgangs- und Verbindungsleitung (13, 12) ein drittes Absperrorgan (14c) des Ventilsystems (14) angeordnet ist.

5. Kartusche (10) nach einem der voranstehenden Ansprüche, bei der das Ventilsystem (14) im Inneren des Druckbehälters (11) angeordnet ist.

6. Kartusche (10) nach einem der voranstehenden Ansprüche, die ein im Wesentlichen zylinderförmiges Gehäuse (20) mit einer Mantelfläche und zwei Stirnflächen aufweist, wobei die erste Anschlussfläche (10a) an einer der Stirnflächen angeordnet ist.

7. Kartusche (10) nach einem der voranstehenden Ansprüche, bei der in einem Bereich der ersten Anschlussfläche (10a) ein Verriegelungselement (16a, 16b) zur Herstellung einer sicheren Verbindung mit einem Fluidverbraucher (40) und/oder einer weiteren Kartusche (10') angeordnet ist, wobei das Verriegelungselement (16a, 16b) vorzugsweise als Permanentmagnet ausgebildet ist.

8. Kartusche (10) nach einem der voranstehenden Ansprüche, bei der die Übertragungseinheit (20a, 20b) eine Stromübertragungsschnittstelle aufweist oder die Kommunikationsschnittstelle (18a, 18b) als Stromübertragungsschnittstelle (19a, 19b) ausgebildet ist.

9. Kartusche (10) nach einem der voranstehenden Ansprüche, bei der die Kommunikationseinheit (18) mit dem Ventilsystem (14) verbunden ist zur Betätigung eines oder mehrerer Absperrorgane (14a, 14b, 14c).

10. Kartusche (10) nach einem der voranstehenden Ansprüche, bei der eine als Teil einer ersten Übertragungseinheit (20a) ausgebildete erste Kommunikationsschnittstelle (18a) mit einer als Teil einer zweiten Übertragungseinheit (20b) ausgebildeten zweiten Kommunikationsschnittstelle (18b) über die Kommunikationseinheit (18) verbindbar ist.

11. Kartusche (10) nach einem der voranstehenden Ansprüche, bei der die Kommunikationseinheit (18) mit mindestens einem Sensor (21, 22, 23, 24, 25) verbunden ist, wobei der mindestens eine Sensor vorzugsweise als ein Innentemperatursensor (21), ein Außentemperatursensor (22), ein Drucksensor (23), ein Gassensor (24) oder ein Gaslecksensor (25) ausgebildet ist.

**12.** Kartusche (10) nach einem der voranstehenden Ansprüche, wobei die Kartusche (10) derart ausgebildet ist, dass das erste Absperrorgan (14a) bei einer positiven Druckdifferenz zwischen der Verbindungsleitung (12) und dem Druckbehälter (11) öffnet, und/oder wobei die Kartusche (10) derart ausgebildet ist, dass das erste Absperrorgan (14a) bei einer mechanischen Trennung von einem Fluidverbraucher (40) oder einer weiteren Kartusche (10') schließt.

**13.** Kartuschen-System aus mindestens einer Kartusche (10, 10', 10") ausgebildet nach einem der Ansprüche 1 bis 12 und einer Ventilsteuerungseinheit (30) zur Steuerung des Ventilsystems (14) über die Kommunikationseinheit (18), wobei vorzugsweise ein Fluidverbraucher (40) an die erste Anschlussfläche (10a) der Kartusche (10) angeschlossen ist, wobei weiter vorzugsweise die Ventilsteuerungseinheit (30) als Teil des Fluidverbrauchers (40) ausgebildet ist.

**14.** Kartuschen-System nach Anspruch 13, mit einer weiteren Kartusche (10'), die an die Kartusche (10) angeschlossen ist, wobei eine erste Anschlussfläche (10a') der weiteren Kartusche (10') mit der zweiten Anschlussfläche (10b) der Kartusche (10) verbunden ist.

**15.** Verfahren zum Verbinden einer Kartusche (10) mit einer weiteren Kartusche (10') jeweils ausgebildet nach einem der Ansprüche 1 bis 12, mit den Schritten:

- Herstellen einer mechanischen Verbindung zwischen einer zweiten Anschlussfläche (10b) der Kartusche (10) und einer ersten Anschlussfläche (10a') der weiteren Kartusche (10');
- Herstellen einer elektronischen Verbindung zwischen einer zweiten Übertragungseinheit (20b) der Kartusche (10) und einer ersten Übertragungseinheit (20a') der weiteren Kartusche (10');
- Herstellen einer Verbindung zwischen einer ersten Kommunikationseinheit (18) der Kartusche (10) und einer zweiten Kommunikationseinheit (18') der weiteren Kartusche (10') zur Betätigung eines Ventilsystems (14, 14') über die erste und zweite Kommunikationseinheit (18, 18').

**Claims**

**1.** Replaceable cartridge (10) for storing a fluid, having

a pressure vessel (11) for receiving the fluid;
a connecting line (12) which from the pressure vessel (11) extends to a first connector face (10a) on an external side of the cartridge (10) and in the direction of the first connector face (10a) has a taper (12a); and
a valve system (14) which comprises a first shut-off element (14a) disposed in the connecting line (12) ;
**characterized in that**
a transmission unit (20a, 20b) which has an electronic communications interface (18a, 18b) connected to a communications unit (18) is configured in the region of the first connector face (10a) .

**2.** Cartridge (10) according to Claim 1, having a through line (13) which connects the first connector face (10a) to a second connector face (10b) disposed on the external side of the cartridge (10), wherein a second shut-off element (14b) of the valve system (14) is disposed in the through line (13), the through line (13) preferably being at least partially configured as part of the connecting line (12) .

**3.** Cartridge (10) according to Claim 2, wherein the through line (13) is disposed so as to be substantially within the pressure vessel (11) and preferably runs along a central axis of the pressure vessel (11).

**4.** Cartridge (10) according to one of Claims 2 or 3, wherein a third shut-off element (14c) of the valve system (14) is disposed in a common part (13a) of the through line (13) and the connecting line (12).

**5.** Cartridge (10) according to one of the preceding claims, wherein the valve system (14) is disposed in the interior of the pressure vessel (11).

**6.** Cartridge (10) according to one of the preceding claims, having a substantially cylindrical housing (20) having a shell face and two end faces, wherein the first connector face (10a) is disposed on one of the end faces.

**7.** Cartridge (10) according to one of the preceding claims, wherein a locking element (16a, 16b) for establishing a safe connection to a fluid consumer (40) and/or a further cartridge (10') is disposed in a region of the first connector face (10a), the locking element (16a, 16b) preferably being configured as a permanent magnet.

**8.** Cartridge (10) according to one of the preceding claims, wherein the transmission unit (20a, 20b) has a current transmission interface, or the communications interface (18a, 18b) is configured as a current transmission interface (19a, 19b).

**9.** Cartridge (10) according to one of the preceding claims, wherein the communications unit (18) for activating one or a plurality of shut-off elements (14a, 14b, 14c) is connected to the valve system (14) .

10. Cartridge (10) according to one of the preceding claims, wherein a first communications interface (18a), configured as part of a first transmission unit (20a), by way of the communications unit (18) is connectable to a second communications interface (18b) configured as part of a second transmission unit (20b).

11. Cartridge (10) according to one of the preceding claims, wherein the communications unit (18) is connected to at least one sensor (21, 22, 23, 24, 25), the at least one sensor preferably being configured as an interior temperature sensor (21), an exterior temperature sensor (22), a pressure sensor (23), a gas sensor (24) or a gas leak sensor (25) .

12. Cartridge (10) according to one of the preceding claims, wherein the cartridge (10) is configured in such a manner that the first shut-off element (14a) opens in the event of a positive pressure differential between the connecting line (12) and the pressure vessel (11), and/or wherein the cartridge (10) is configured in such a manner that the first shut-off element (14a) closes when being mechanically separated from a fluid consumer (40) or a further cartridge (10').

13. Cartridge system of at least one cartridge (10, 10', 10"), configured according to one of Claims 1 to 12, and a valve control unit (30) for controlling the valve system (14) by way of the communications unit (18), wherein a fluid consumer (40) is preferably connected to the first connector face (10a) of the cartridge (10), wherein furthermore preferably the valve control unit (30) is configured as part of the fluid consumer (40).

14. Cartridge system according to Claim 13, having a further cartridge (10') which is connected to the cartridge (10), wherein a first connector face (10a') of the further cartridge (10') is connected to the second connector face (10b) of the cartridge (10) .

15. Method for connecting a cartridge (10) to a further cartridge (10'), each being configured according to one of Claims 1 to 12, said method comprising the following steps:

- establishing a mechanical connection between a second connector face (10b) of the cartridge (10) and a first connector face (10a') of the further cartridge (10');
- establishing an electronic connection between a second transmission unit (20b) of the cartridge (10) and a first transmission unit (20a') of the further cartridge (10');
- establishing a connection between a first communications unit (18) of the cartridge (10) and a second communications unit (18') of the further cartridge (10') for activating a valve system (14, 14') by way of the first and the second communications unit (18, 18').

**Revendications**

1. Cartouche remplaçable (10) destinée à stocker un fluide, comprenant

un réservoir sous pression (11) destiné recevoir le fluide,
une conduite de liaison (12) qui s'étend depuis le réservoir sous pression (11) jusqu'à une première surface de raccordement (10a) sur une face extérieure de la cartouche (10) et qui présente un rétrécissement (12a) en direction de la première surface de raccordement (10a), et
un système de valve (14) qui comprend un premier organe d'arrêt (14a) disposé dans la conduite de liaison (12),
**caractérisée en ce que**
une unité de transmission (20a, 20b) est réalisée dans la zone de la première surface de raccordement (10a) et présente une interface de communication électronique (18a, 18b) reliée à une unité de communication (18).

2. Cartouche (10) selon la revendication 1, comprenant une conduite de passage (13) qui relie la première surface de raccordement (10a) à une deuxième surface de raccordement (10b) disposée sur la face extérieure de la cartouche (10), un deuxième organe d'arrêt (14b) du système de valve (14) étant disposé dans la conduite de passage (13) et, de préférence, la conduite de passage (13) étant réalisée au moins partiellement comme partie de la conduite de liaison (12).

3. Cartouche (10) selon la revendication 2, dans laquelle la conduite de passage (13) est disposée sensiblement à l'intérieur du réservoir sous pression (11) et s'étend de préférence le long d'un axe central du réservoir sous pression (11).

4. Cartouche (10) selon l'une des revendications 2 ou 3, dans laquelle un troisième organe d'arrêt (14c) du système de valve (14) est disposé dans une partie commune (13a) des conduites de passage et de liaison (13, 12).

5. Cartouche (10) selon l'une des revendications précédentes, dans laquelle le système de valve (14) est disposé à l'intérieur du réservoir sous pression (11).

6. Cartouche (10) selon l'une des revendications précédentes, comprenant un boîtier (20) de forme sensiblement cylindrique avec une surface enveloppe et deux surfaces frontales, la première surface de raccordement (10a) étant disposée sur l'une des surfaces frontales.

7. Cartouche (10) selon l'une des revendications précédentes, dans laquelle un élément de verrouillage (16a, 16b) est disposé dans une zone de la première surface de raccordement (10a) pour établir une liaison sûre avec un consommateur de fluide (40) et/ou avec une autre cartouche (10'), l'élément de verrouillage (16a, 16b) étant réalisé de préférence sous forme d'aimant permanent.

8. Cartouche (10) selon l'une des revendications précédentes, dans laquelle l'unité de transmission (20a, 20b) présente une interface de transmission de courant, ou l'interface de communication (18a, 18b) est réalisée sous forme d'interface de transmission de courant (19a, 19b).

9. Cartouche (10) selon l'une des revendications précédentes, dans laquelle l'unité de communication (18) est reliée au système de valve (14) pour actionner un ou plusieurs organes d'arrêt (14a, 14b, 14c) .

10. Cartouche (10) selon l'une des revendications précédentes, dans laquelle une première interface de communication (18a), réalisée en tant que partie d'une première unité de transmission (20a), peut être reliée à une deuxième interface de communication (18b), réalisée en tant que partie d'une deuxième unité de transmission (20b), via l'unité de communication (18).

11. Cartouche (10) selon l'une des revendications précédentes, dans laquelle l'unité de communication (18) est reliée à au moins un capteur (21, 22, 23, 24, 25), ledit au moins un capteur étant de préférence conçu comme un capteur de température intérieure (21), un capteur de température extérieure (22), un capteur de pression (23), un capteur de gaz (24) ou un capteur de fuite de gaz (25).

12. Cartouche (10) selon l'une des revendications précédentes, dans laquelle la cartouche (10) est réalisée de telle sorte que le premier organe d'arrêt (14a) s'ouvre en cas de différence de pression positive entre la conduite de liaison (12) et le réservoir sous pression (11), et/ou la cartouche (10) est réalisée de telle sorte que le premier organe d'arrêt (14a) se ferme en cas de séparation mécanique d'un consommateur de fluide (40) ou d'une autre cartouche (10').

13. Système de cartouche comprenant au moins une cartouche (10, 10', 10") réalisée selon l'une des revendications 1 à 12 et une unité de commande de valve (30) destinée à commander le système de valve (14) par l'intermédiaire de l'unité de communication (18), de préférence, un consommateur de fluide (40) étant raccordé à la première surface de raccordement (10a) de la cartouche (10), de préférence encore, l'unité de commande de valve (30) étant réalisée comme partie du consommateur de fluide (40).

14. Système de cartouche selon la revendication 13, comprenant une autre cartouche (10') qui est raccordée à la cartouche (10), une première surface de raccordement (10a') de l'autre cartouche (10') étant reliée à la deuxième surface de raccordement (10b) de la cartouche (10).

15. Procédé de liaison d'une cartouche (10) à une autre cartouche (10'), chacune réalisée selon l'une des revendications 1 à 12, comprenant les étapes consistant à :

- établir une liaison mécanique entre une deuxième surface de raccordement (10b) de la cartouche (10) et une première surface de raccordement (10a') de l'autre cartouche (10') ;
- établir une connexion électronique entre une deuxième unité de transmission (20b) de la cartouche (10) et une première unité de transmission (20a') de l'autre cartouche (10') ;
- établir une liaison entre une première unité de communication (18) de la cartouche (10) et une deuxième unité de communication (18') de l'autre cartouche (10') pour actionner un système de valve (14, 14') par l'intermédiaire des première et deuxième unités de communication (18, 18').

Fig. 1

Fig. 2 a

Fig. 2 b

Fig. 3 a

Fig. 3 b

Fig. 3 c

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5953922 A